# FASCICULE DE BREVET EUROPEEN

(11) **EP 4 405 166 B1**
(45) Date de publication et mention de la délivrance du brevet: **29.10.2025**
(21) Numéro de dépôt: 22785765.3
(22) Date de dépôt: 12.09.2022
(51) Int. Cl.: B29D 30/04, B29D 30/06

(54) **ENCEINTE DE VULCANISATION DE PNEUMATIQUE**
REIFENVULKANISATIONSKAMMER
TYRE VULCANISATION CHAMBER

(30) Priorité: 22.09.2021 FR 2109957
(43) Date de publication de la demande: 31.07.2024
(73) Titulaire: COMPAGNIE GENERALE DES ETABLISSEMENTS MICHELIN, 63000 Clermont-Ferrand (FR)
(72) Inventeur: SIMONELLI, Thomas, 63040 CLERMONT-FERRAND Cedex 9 (FR)
(74) Mandataire: M.F.P. Michelin
(86) Numéro de dépôt international: PCT/FR2022/051711
(87) Numéro de publication internationale: WO 2023/047040

(56) Documents cités:
- EP-A1- 0 368 546
- WO-A1-2008/112916
- US-A- 2 997 740
- US-B1- 6 332 999

## Description

L'invention concerne une enceinte de vulcanisation de pneumatique.

Il est connu du document WO 2013/164282 A1 une enceinte de vulcanisation de pneumatique comprenant un plateau supérieur, un plateau inférieur, une membrane de cuisson un ventilateur de fluide caloporteur (azote) et des moyens de canalisation du flux de fluide. Malheureusement de telles enceintes de vulcanisation ne peuvent pas être utilisées pour vulcaniser des pneumatiques comprenant des éléments porteurs indépendants, et de type filaire, régulièrement disposés de manière continue dans la cavité intérieure du pneumatique, du sommet du pneumatique jusqu'à une semelle flexible encrée au bourrelet du pneumatique, comme ceux décrits dans WO2019/092343A1.

Le document de brevet US 2 997 740 A divulgue une enceinte de vulcanisation délimitée par un plateau supérieur de manoeuvre et un plateau inférieur.

Par ailleurs, une telle enceinte de vulcanisation dépourvue de membrane pour vulcaniser ces pneumatiques occasionne une traversée inefficace de l'azote au travers des éléments porteurs filaires, et par voie de conséquence une vulcanisation de mauvaise qualité du pneumatique.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement

Aussi il subsiste le besoin d'une enceinte qui permette la vulcanisation efficace, rapide et parfaitement homogène d'un pneumatique comprenant dans sa cavité interne des éléments porteurs de type filaire.

L'invention a pour objet une enceinte de vulcanisation de pneumatique comprenant des éléments porteurs filaires disposés dans la cavité interne et délimité par un plateau supérieur de manoeuvre et un plateau inférieur, dont les deux bourrelets sont fixés à la circonférence desdits plateaux, l'intérieur de l'enceinte d'axe vertical XX' et horizontal YY' passant par le centre et comprenant au moins un moyen de chauffage, un ventilateur de circulation d'un fluide caloporteur, et un moyen d'orientation du flux de fluide caloporteur.

L'enceinte se caractérise en ce que le ventilateur de circulation est disposé au centre de l'enceinte à l'intersection des axes XX' et YY' de manière à orienter le flux de fluide caloporteur selon l'axe YY', en ce que le moyen d'orientation du flux de fluide caloporteur est disposé en sortie du ventilateur, ledit moyen d'orientation comprenant *une première partie* comprenant des déflecteurs, ayant chacun une extrémité d'entrée et une extrémité de sortie, lesdits déflecteurs déviant chacun le flux de fluide caloporteur selon un angle α, ledit angle α étant le résultat de la tangence d'un axe VV' passant par l'extrémité d'entrée d'un déflecteur et par le centre de l'enceinte et d'un axe DD' tangent à l'extrémité d'entrée du même déflecteur, et *une seconde partie* séparant en deux demi flux sensiblement égaux ledit flux dévié selon un angle β, ledit angle β étant le résultat de la tangence d'un axe ZZ' passant par l'extrémité de sortie d'un déflecteur et le centre de l'enceinte, et d'un axe CC' passant par l'extrémité de sortie du même déflecteur, et en ce que le fluide caloporteur est de l'azote ou de l'air.

L'enceinte selon l'invention présente l'avantage de diviser le flux de fluide caloporteur en deux flux sensiblement identiques, permettant à chacun des deux flux d'atteindre simultanément et de manière optimale, la totalité du volume du pneumatique occultés par les éléments porteurs filaires, et donc d'effectuer une vulcanisation dans des durées équivalentes à celles connues jusqu'ici, et par conséquent sans surconsommation d'énergie. La division du flux de fluide caloporteur facilite et accélère son accès vers les éléments filaire

Les enceintes de vulcanisation habituellement utilisées comprennent une membrane de vulcanisation destinées à mettre en contact la chaleur du fluide caloporteur avec toute la surface interne du pneumatique. Mais de tels modes de vulcanisation ne peuvent pas être utilisés avec un pneumatique comprenant des éléments porteurs filaires disposés dans la cavité interne. En effet, la membrane de vulcanisation ne peut pas se déployer dans la cavité de tel pneumatique lors de la vulcanisation, du fait de la présence des éléments filaires, au risque d'altérer la structure filaire, mais également la membrane de vulcanisation de l'enceinte de vulcanisation, et par voie de conséquence aboutir à la non vulcanisation du pneumatique.

Les éléments filaires de ces pneumatiques sont régulièrement espacés dans la cavité interne du pneumatique, créant ainsi des couloirs de circulation figés du fluide caloporteur. La présence de ces couloirs nécessite une circulation homogène du fluide caloporteur pour une vulcanisation efficace des parties internes du pneumatique, partiellement obstruées par les éléments filaires. Mais ces couloirs créent des volumes mal desservis par le fluide caloporteur. Le moyen d'orientation du fluide caloporteur selon l'invention permet d'atteindre facilement et rapidement cesdits volumes, et ceci sans ralentissement de la vitesse du flux.

Enfin, l'utilisation d'un fluide caloporteur, tel que l'azote selon l'invention permet, contrairement à la vapeur d'eau d'éviter, lors de la vulcanisation, l'endommagement des câbles constituant les éléments porteurs filaires.

De préférence, la première partie du moyen d'orientation comprend entre 10 et 20 déflecteurs déviant le flux de fluide caloporteur.

De préférence, l'angle α est compris entre 45 et 90 degrés, et l'angle β compris entre 5 et 45 degrés.

De préférence, la seconde partie du moyen d'orientation présente une forme sensiblement circulaire ayant une première extrémité sensiblement circulaire D1 comprise ente environ 200 et 360mm, et une seconde extrémité sensiblement circulaire D2 comprise ente environ 300 et 470mm.

De préférence, la seconde partie du moyen d'orientation présente une forme sensiblement circulaire ayant une première extrémité sensiblement circulaire de diamètre D1 égal à 220mm, et une seconde extrémité sensiblement circulaire de diamètre D2 égal à 360mm.

De préférence, le flux de fluide caloporteur, choisi parmi les fluides connus pour la vulcanisation des pneumatiques, a une vitesse d'environ 20m/s à la sortie du ventilateur.

De préférence, le flux de fluide caloporteur a une vitesse comprise entre environ 6 et 7m/s dans la cavité interne du pneumatique. Cette vitesse est la vitesse mesurée juste après le passage des éléments filaires, qui offrent une légère résistance.

L'invention va être décrite à l'aide des figures suivantes, schématiques et non nécessairement à l'échelle, et dans lesquelles :
- La figure 1 représente une vue schématique en coupe d'une enceinte de vulcanisation selon l'art antérieur,
- La figure 2 représente une vue schématique en coupe d'une l'enceinte de vulcanisation selon l'invention,
- La figure 3 représente une vue schématique en 3D du moyen d'orientation de l'enceinte de vulcanisation selon l'invention,
- les figures 4 et 5 représentent une vue schématique de dessus du moyen d'orientation de l'enceinte de vulcanisation selon l'invention,

Comme le montre **la figue 1** de l'art antérieur, l'enceinte de vulcanisation comprend un plateau supérieur 51 et un plateau inférieur 52, reliés par une membrane élastique 10 de vulcanisation dont les deux bourrelets 53 et 54 du pneumatique P sont ancrés à la circonférence desdits plateaux 51, 52, et viennent se plaquer sur la partie interne du pneumatique sous l'effet de la pression du fluide caloporteur. L'enceinte interne collabore de façon connue avec un moule rigide destiné à conférer sa forme géométrique définitive audit pneumatique, et formée notamment de deux coquilles (non représentées) destinées à mouler les flancs et la bande de roulement du pneumatique.

Cette enceinte selon l'art antérieur comprend par ailleurs des moyens de chauffage et un ventilateur de circulation 40 de fluide caloporteur, agencés à l'intérieur. Cette enceinte est délimitée par la membrane de cuisson 10 lorsqu'elle est déployée par le fluide caloporteur sous pression, et par les parties internes d'un plateau supérieur 51 et d'un plateau de manœuvre 52. Dans cette représentation de l'art antérieur, l'enceinte comprend un moyen d'orientation 60 du fluide caloporteur disposé en sortie immédiate du ventilateur de circulation 40.

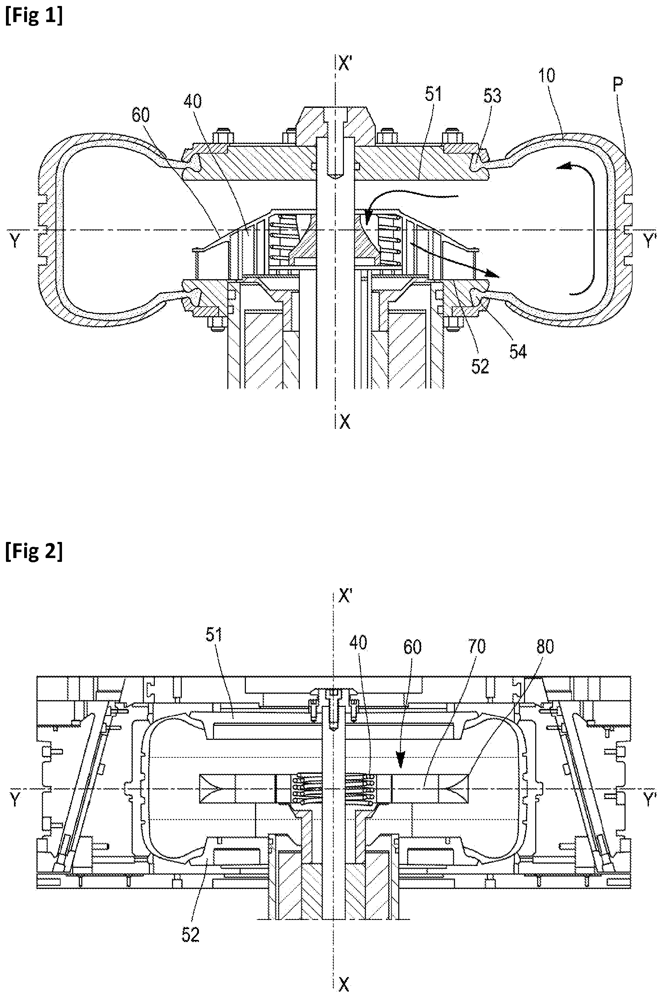

L'enceinte illustrée sur **la** **figure 2** selon l'invention se distingue de l'enceinte de l'art antérieur entre autres par le fait qu'elle ne comprend aucune membrane élastique, et que le fluide caloporteur est de l'azote. Le ventilateur de circulation 40 est disposé au centre de l'enceinte, à l'intersection des axes XX' et YY'. Il est désolidarisé du plateau inférieur 52. Une telle disposition du ventilateur 40 permet de recentrer le flux d'azote afin de l'envoyer de manière plus homogène vers l'ensemble de la paroi interne du pneumatique.

La sortie du ventilateur 40 comprend un moyen d'orientation 60 de l'azote constitué d'une première partie 70 destiné à dévier le flux d'azote à la sortie du ventilateur 40 selon un angle α d'environ 30 degrés. Cette première déviation du flux d'azote facilite la projection du flux vers les deux épaules du pneumatique. Le moyen d'orientation 60 comprend, par ailleurs, une seconde partie 80 destiné à séparer le flux d'azote dévié en deux flux sensiblement égaux de manière à ce que chaque demi flux d'azote optimise sa traversée dans les lignées d'éléments porteurs filaires, et par conséquent chauffe correctement le pneumatique. Un tel agencement des première 70 et seconde 80 parties 70 du moyen d'orientation 60 permet d'atteindre des temps de vulcanisation très proches de ceux obtenus pour des pneumatiques classiques.

. Cette répartition en deux flux équivalents du fluide caloporteur permet une répartition optimale de la chaleur, et par conséquent une vulcanisation correcte.

Ainsi la diffusion optimale du flux d'azote est effectuée grâce à un moyen d'orientation 60 disposé à la sortie immédiate du ventilateur de circulation afin de permettre un accès correct et efficace du flux de fluide caloporteur dans l'espace délimité par la surface radialement interne 4 de la nappe carcasse et la surface radialement extérieure 5 des éléments filaires 2, et par conséquent évite d'endommager les éléments filaires 2 du pneumatique lors de la vulcanisation.

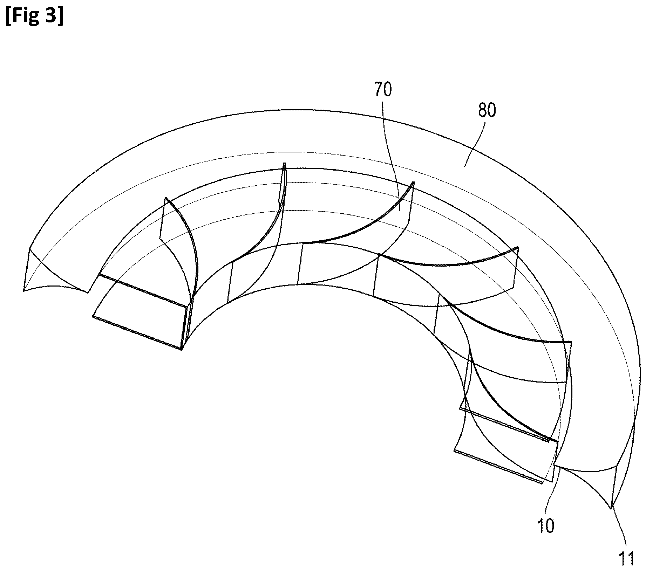

Comme le montre **la** **figure 3****,** le moyen d'orientation 60 de fluide caloporteur comprend une première partie 70 de déviation, disposée juste à la sortie d'un ventilateur (non représenté), et une seconde partie 80 disposée à la sortie de ladite première partie 70.

La seconde partie 80 présente une forme circulaire, de section sensiblement de forme tronconique. La seconde partie 80 comprend une première extrémité 10 sensiblement circulaire de diamètre D1 environ égale à 360mm, et une seconde extrémité 11 sensiblement circulaire de diamètre D2 environ égale à 470mm. La seconde partie 80 est constituée en un matériau choisi notamment parmi l'acier ou tout autre matériau adapté.

La seconde partie 80 est une structure pleine ou creuse. Le flux du fluide caloporteur a une vitesse de propagation d'environ 20m/s à la sortie du ventilateur 40, et une vitesse de propagation de chacun des deux flux déviés d'environ 6 m/s dans la cavité interne d'un pneumatique de dimension 245/45 R18. La durée de cuisson pour un tel pneumatique dure environ 10 minutes.

Ce moyen d'orientation 60 de l'enceinte selon l'invention permet de séparer en deux flux le fluide caloporteur de manière à ce que la chaleur accède de manière optimale sur la paroi interne du pneumatique et, donc de permettre une vulcanisation dans le délai de cuisson requis pour la dimension du pneumatique choisi, sans dégradation causée par une température trop élevée et/ou une durée de cuisson trop longue.

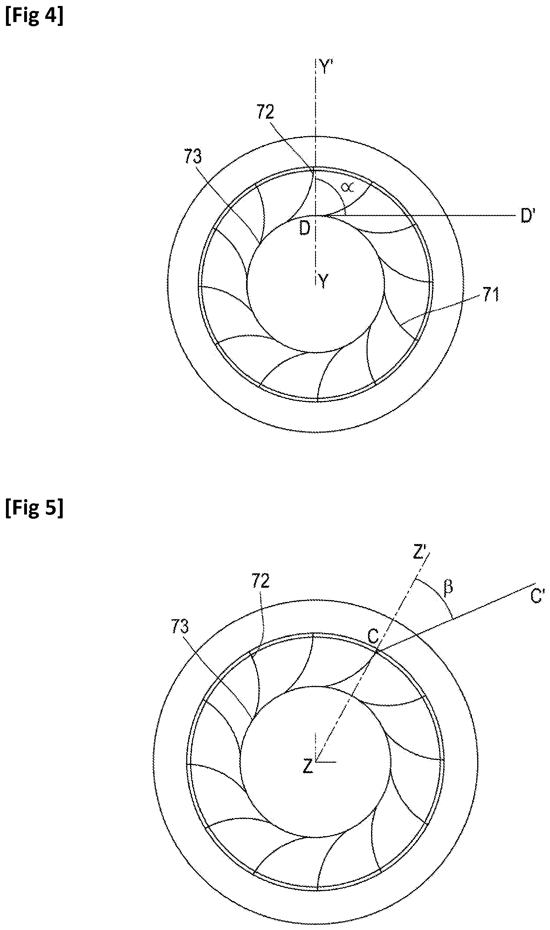

**La** **figure 4** représente l'emplacement de l'angle α par rapport aux axes VV' et DD'. L'axe VV' passe par l'extrémité de sortie 72 d'un déflecteur 71 de la première partie 70 et par le centre de l'enceinte. L'axe DD', tangent à l'extrémité d'entrée du déflecteur, passe par l'extrémité d'entrée 73 d'un déflecteur 71 de la première partie 70.

**La** **figure 5** représente l'emplacement de l'angle β par rapport aux axes ZZ' et CC'. L'axe ZZ' passe par le centre de l'enceinte et par l'extrémité de sortie 72 d'un déflecteur 71. L'axe CC' passe par l'extrémité de sortie 72 d'un déflecteur 71 et la tangente de l'extrémité d'entrée 73 du même déflecteur.

## Revendications

1. Enceinte de vulcanisation de pneumatique comprenant des éléments porteurs filaires disposés dans la cavité interne et délimité par un plateau supérieur (51) de manoeuvre et un plateau inférieur (52), dont les deux bourrelets (53,54) sont fixés à la circonférence desdits plateaux, l'intérieur de l'enceinte d'axe vertical XX' et horizontal YY' passant par le centre, et comprenant au moins un moyen de chauffage, un ventilateur de circulation (40) d'un fluide caloporteur, et un moyen d'orientation (60) du flux de fluide caloporteur, **caractérisé en ce que**
a. le ventilateur de circulation (40) est disposé au centre de l'enceinte à l'intersection des axes XX' et YY' de manière à orienter le flux de fluide caloporteur selon l'axe YY',
**b. en ce que** le moyen d'orientation (60) du flux de fluide caloporteur est disposé en sortie du ventilateur, ledit moyen d'orientation (60) comprenant *une première partie* (70) comprenant des déflecteurs, ayant chacun une extrémité d'entrée et une extrémité de sortie, lesdits déflecteurs déviant chacun le flux de fluide caloporteur selon un angle α, ledit angle α étant le résultat de la tangence d'un axe VV' passant par l'extrémité d'entrée d'un déflecteur et par le centre de l'enceinte et d'un axe DD' tangent à l'extrémité d'entrée du même déflecteur, et *une seconde partie* (80) séparant en deux demi flux sensiblement égaux ledit flux dévié selon un angle β, ledit angle β étant le résultat de la tangence d'un axe ZZ' passant par l'extrémité de sortie d'un déflecteur et le centre de l'enceinte, et d'un axe CC' passant par l'extrémité de sortie du même déflecteur,
c. **et en ce que** le fluide caloporteur est de l'azote ou de l'air.

2. Enceinte selon la revendication 1 dans laquelle la première partie (70) du moyen d'orientation (60) comprend entre 10 et 20 déflecteurs déviant le flux de fluide caloporteur.

3. Enceinte selon la revendication 1 dans laquelle l'angle α est compris entre 45 et 90 degrés, et l'angle β compris entre 5 et 45 degrés.

4. Enceinte selon la revendication 1 dans laquelle la seconde partie (80) du moyen d'orientation (60) présente une forme circulaire ayant une première extrémité circulaire D1 comprise ente environ 200 et 360mm, et une seconde extrémité circulaire D2 comprise ente environ 300 et 470mm

5. Enceinte selon la revendication 1 dans laquelle la seconde partie (80) du moyen d'orientation (60) présente une forme sensiblement circulaire ayant une première extrémité sensiblement circulaire de diamètre D1 égal à 220mm, et une seconde extrémité sensiblement circulaire de diamètre D2 égal à 360mm.

6. Enceinte selon la revendication 1 dans laquelle le flux de fluide caloporteur a une vitesse de 20m/s à la sortie du ventilateur.

7. Enceinte selon la revendication 1 dans laquelle le flux de fluide caloporteur a une vitesse comprise entre 6 et 7m/s dans la cavité interne du pneumatique.

## Patentansprüche

1. Reifenvulkanisationskammer, welche im Innenhohlraum angeordnete fadenförmige Tragelemente umfasst und von einer oberen Betätigungsplatte (51) und einer unteren Platte (52) begrenzt wird, wobei die zwei Wülste (53, 54) am Umfang dieser Platten befestigt sind, wobei das Innere der Kammer eine vertikale Achse XX' und eine horizontale Achse YY' aufweist, die durch den Mittelpunkt verlaufen, und mindestens ein Heizmittel, einen Umluftventilator (40) für ein Wärmeträgerfluid und ein Mittel zur Orientierung (60) des Stroms von Wärmeträgerfluid umfasst, **dadurch gekennzeichnet, dass**
a. der Umluftventilator (40) am Mittelpunkt der Kammer am Schnittpunkt der Achsen XX' und YY' so angeordnet ist, dass der Strom von Wärmeträgerfluid entlang der Achse YY' orientiert wird,
b. dadurch, dass das Mittel zur Orientierung (60) des Stroms von Wärmeträgerfluid am Ausgang des Ventilators angeordnet ist, wobei das Mittel zur Orientierung (60) einen ersten Teil (70) umfasst, der Ablenkelemente umfasst, die jeweils ein Eingangsende und ein Ausgangsende aufweisen, wobei die Ablenkelemente jeweils den Strom von Wärmeträgerfluid in einem Winkel α ablenken, wobei der Winkel α das Ergebnis des Schnitts einer Achse VV', die durch das Eingangsende eines Ablenkelements und durch den Mittelpunkt der Kammer verläuft, und einer Achse DD' ist, die tangential zum Eingangsende desselben Ablenkelements ist, und einen zweiten Teil (80), der den in einem Winkel β abgelenkten Strom in zwei im Wesentlichen gleiche Stromhälften aufteilt, wobei der Winkel β das Ergebnis des Schnitts einer Achse ZZ', die durch das Ausgangsende eines Ablenkelements und den Mittelpunkt der Kammer verläuft, und einer Achse CC' ist, die durch das Ausgangsende desselben Ablenkelements verläuft,
c. und dadurch, dass das Wärmeträgerfluid Stickstoff oder Luft ist.

2. Kammer nach Anspruch 1, wobei der erste Teil (70) des Mittels zur Orientierung (60) zwischen 10 und 20 Ablenkelemente umfasst, die den Strom von Wärmeträgerfluid ablenken.

3. Kammer nach Anspruch 1, wobei der Winkel α zwischen 45 und 90 Grad liegt und der Winkel β zwischen 5 und 45 Grad liegt.

4. Kammer nach Anspruch 1, wobei der zweite Teil (80) des Mittels zur Orientierung (60) eine kreisförmige Gestalt aufweist, mit einem ersten kreisförmigen Ende D1 zwischen ungefähr 200 und 360 mm und einem zweiten kreisförmigen Ende D2 zwischen ungefähr 300 und 470 **mm.**

5. Kammer nach Anspruch 1, wobei der zweite Teil (80) des Mittels zur Orientierung (60) eine im Wesentlichen kreisförmige Gestalt aufweist, mit einem ersten im Wesentlichen kreisförmigen Ende mit einem Durchmesser D1 von 220 mm und einem zweiten im Wesentlichen kreisförmigen Ende mit einem Durchmesser D2 von 360 mm.

6. Kammer nach Anspruch 1, wobei der Strom von Wärmeträgerfluid am Ausgang des Ventilators eine Geschwindigkeit von 20 m/s aufweist.

7. Kammer nach Anspruch 1, wobei der Strom von Wärmeträgerfluid im Innenhohlraum des Reifens eine Geschwindigkeit zwischen 6 und 7 m/s aufweist.

## Claims

1. Chamber for vulcanizing a tyre that comprises filamentary load-bearing elements arranged within the internal cavity, said chamber being delimited by an operating upper plate (51) and a lower plate (52), the two beads (53, 54) of said tyre being fastened to the circumference of said plates, the interior of the chamber having a vertical axis XX' and horizontal axis YY' passing through the centre, and comprising at least one heating means, a circulation blower (40) for circulating a heat-transfer fluid, and a directing means (60) for directing the flow of heat-transfer fluid, **characterized in that**
a. the circulation blower (40) is arranged at the centre of the chamber, at the intersection of the axes XX' and YY', so as to direct the flow of heat-transfer fluid along the axis YY',
**b. in that** the directing means (60) for directing the flow of heat-transfer fluid is arranged at the outlet of the blower, said directing means (60) comprising *a first portion* (70) comprising deflectors, each having an inlet end and an outlet end, each of said deflectors deflecting the flow of heat-transfer fluid by an angle α, said angle α being the result of the tangency of an axis VV' passing through the inlet end of a deflector and through the centre of the chamber and of an axis DD' tangential to the inlet end of the same deflector, and α *second portion* (80) separating said deflected flow into two substantially equal half-flows by an angle β, said angle β being the result of the tangency of an axis ZZ' passing through the outlet end of a deflector and the centre of the chamber, and of an axis CC' passing through the outlet end of the same deflector,
c. **and in that** the heat-transfer fluid is nitrogen or air.

2. Chamber according to Claim 1, wherein the first portion (70) of the directing means (60) comprises between 10 and 20 deflectors deflecting the flow of heat-transfer fluid.

3. Chamber according to Claim 1, wherein the angle α is between 45 and 90 degrees, and the angle β is between 5 and 45 degrees.

4. Chamber according to Claim 1, wherein the second portion (80) of the directing means (60) has a circular shape having a circular first end D1 that is between approximately 200 and 360 mm, and a circular second end D2 that is between approximately 300 and 470 mm.

5. Chamber according to Claim 1, wherein the second portion (80) of the directing means (60) has a substantially circular shape having a substantially circular first end with a diameter D1 equal to 220 mm, and a substantially circular second end with a diameter D2 equal to 360 mm.

6. Chamber according to Claim 1, wherein the flow of heat-transfer fluid has a speed of 20 m/s at the outlet of the blower.

7. Chamber according to Claim 1, wherein the flow of heat-transfer fluid has a speed of between 6 and 7 m/s in the internal cavity of the tyre.
